(19) Europäisches Patentamt
European Patent Office
Office européen des brevets

(11) **EP 3 015 438 B1**

(12) **FASCICULE DE BREVET EUROPEEN**

(45) Date de publication et mention
de la délivrance du brevet:
**01.01.2020 Bulletin 2020/01**

(51) Int Cl.:
**C04B 28/08** *(2006.01)* **C04B 28/14** *(2006.01)*
**C04B 18/14** *(2006.01)* **C04B 40/06** *(2006.01)*
C04B 111/00 *(2006.01)* C04B 111/60 *(2006.01)*

(21) Numéro de dépôt: **15191939.6**

(22) Date de dépôt: **28.10.2015**

(54) **LIANT HYDRAULIQUE À BASE DE LAITIER GRANULÉ DE HAUT FOURNEAU MOULU À PRISE ET DURCISSEMENT AMÉLIORÉS**

HYDRAULISCHES BINDEMITTEL AUF DER BASIS VON HÜTTENSAND MIT VERBESSERTER ABBINDUNG UND HÄRTUNG

HYDRAULIC BINDER MADE OF CAST BLAST-FURNACE GRANULATED SLAG WITH IMPROVED CURING AND HARDENING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2014 FR 1460440**

(43) Date de publication de la demande:
**04.05.2016 Bulletin 2016/18**

(73) Titulaire: **BOSTIK SA**
**92700 Colombes (FR)**

(72) Inventeurs:
• **KURYATNYK, Tetyana**
**77550 Moissy Cramayel (FR)**
• **BECQUET, Jérémy**
**77550 Moissy Cramayel (FR)**

(74) Mandataire: **Chahine, Audrey Claire et al**
**ARKEMA France**
**Département Propriété Industrielle**
**420, rue d'Estienne d'Orves**
**92705 Colombes Cedex (FR)**

(56) Documents cités:
**EP-A1- 0 029 069 EP-A1- 1 195 361**
**EP-A2- 1 975 135 WO-A1-00/00447**
**DE-A1- 3 049 003 DE-A1- 4 135 144**
**JP-A- H10 231 165 US-A1- 2003 167 972**
**US-B1- 6 409 820**

Remarques:
Le dossier contient des informations techniques présentées postérieurement au dépôt de la demande et ne figurant pas dans le présent fascicule.

**Description**

La présente invention concerne une composition de liant hydraulique comprenant au moins 50% en poids de laitier granulé de haut fourneau moulu (par rapport au poids dudit liant) et un système d'activation dudit laitier, ledit système comprenant au moins du sulfate de calcium, au moins un produit choisi parmi une source de clinker Portland et de la chaux, au moins un dérivé d'aluminium, et au moins un sel de métal alcalin ou alcalino-terreux.

La présente invention concerne aussi une composition de matériau de construction prête-à-gâcher comprenant un tel liant hydraulique et des granulats de matériau inerte susceptibles d'être agglomérés en présence d'une phase aqueuse.

La présente invention concerne également un procédé de mise en oeuvre de la composition prête-à-gâcher selon l'invention, comprenant une étape de gâchage de ladite composition avec de l'eau, en vue de la préparation d'un matériau de construction, tel qu'un béton ou mortier, et notamment un mortier colle, mortier joint, ou mortier ou enduit de lissage.

Les liants hydrauliques sont constitués essentiellement de composés minéraux et sont caractérisés par leur capacité à faire prise et durcir de manière irréversible lorsqu'ils sont mis en contact de l'eau. Le développement des propriétés finales du liant dépend des réactions qui ont lieu au contact de l'eau et de la nature des produits de réaction. Contrairement au liant non hydraulique, les hydrates formés au cours des réactions d'hydratation du liant hydraulique sont insolubles dans l'eau. Après durcissement, on obtient un produit rigide, stable au contact de l'eau et qui conserve ses propriétés mécaniques (résistance) même sous l'eau.

Parmi les liants hydrauliques existants, le ciment Portland est sans doute l'un des plus utilisés dans le monde. Composé d'au moins 95% en poids de clinker Portland et jusqu'à 5% en poids de sulfate de calcium, le ciment Portland mélangé avec des granulats de matériau inerte et gâché avec de l'eau de façon appropriée, est capable de produire un mortier ou un béton qui conserve son ouvrabilité pendant un temps suffisamment long pour sa mise en œuvre et permet d'atteindre suffisamment rapidement des propriétés mécaniques satisfaisantes (notamment de résistance mécanique) pour l'application visée, tout en présentant une certaine stabilité dimensionnelle.

Toutefois, face aux enjeux environnementaux grandissants, les industries cimentières sont maintenant contraintes de limiter l'utilisation et la production du ciment Portland.

Le processus de fabrication du ciment Portland est énergivore et génère d'importantes émissions de dioxyde de carbone ($CO_2$).

Le clinker Portland est un produit à base de silicate et d'aluminate de calcium, obtenu en calcinant à haute température (autour de 1450°C) un mélange de calcaire et d'argile dans des proportions déterminées (proportions respectives de 80%/20% en poids environ), puis refroidissement rapide du mélange.

Au cours de l'étape de calcination du calcaire en chaux vive (oxyde de calcium, CaO), d'importantes quantités de $CO_2$ sont émises.

En outre, le produit obtenu après refroidissement du mélange, se présente sous la forme de granules qui sont concassées avant d'être broyées finement avec du sulfate de calcium pour pouvoir former le ciment Portland, ce qui génère des coûts supplémentaires en énergie.

Un autre inconvénient lié à l'utilisation de quantité importante de ciment Portland est que le clinker Portland est un agent sensibilisant et irritant pour l'organisme notamment la peau, les yeux et voies respiratoires dès lors qu'il est présent à plus de 10% en poids dans un produit. De fait, dans la plupart des pays, la réglementation impose de prendre des précautions particulières, et notamment de mettre en place des règles et/ou dispositifs de sécurité, pour la manipulation des produits à forte teneur en clinker Portland.

La recherche s'est donc tournée vers le développement de nouveaux types de liants hydrauliques comprenant des déchets industriels, à savoir des sous-produits de la sidérurgie tels que des laitiers de haut fourneau. Cependant, contrairement au clinker Portland, ces sous-produits de la sidérurgie sont des composés à caractère hydraulique latent, c'est-à-dire qu'une activation est nécessaire pour qu'ils développent rapidement au contact de l'eau des propriétés mécaniques intéressantes. En effet, l'ajout de l'eau à un échantillon de laitier de haut fourneau non activé n'entraine aucun phénomène de prise ou de durcissement du mélange.

L'activation de laitier de haut fourneau peut être réalisée par ajout d'un ou plusieurs composés chimiques de nature particulière.

L'activation du laitier de haut fourneau peut être obtenue par ajout soit d'un agent alcalin (par exemple soude ou chaux), soit d'un agent à base de sulfate (par exemple gypse), soit d'une combinaison des deux types d'agents : gypse et soude ou gypse et chaux. En présence de ciment Portland, le laitier de haut fourneau peut être activé par la chaux que libère le clinker Portland hydraté, et par le sulfate de calcium.

Toutefois, l'utilisation d'activateurs alcalins à des teneurs élevées dans le liant ou dans le matériau de construction pose des problèmes sanitaires car ils sont susceptibles de causer de graves irritations cutanées.

Par ailleurs, bien que l'utilisation de sulfate de calcium présente l'avantage de ne pas être irritant ou sensibilisant pour l'organisme, les matériaux de construction fabriqués avec un tel liant présentent souvent des problèmes de stabilité dans le temps. Ils sont généralement peu résistants à l'eau et le contact répété ou prolongé avec de l'eau ou dans des conditions humides (intempéries, espace confiné humide, immersion sous l'eau...) peut conduire à une perte de résistance mécanique et de durabilité des matériaux de construction.

Dans la demande US 6,409,820, il est divulgué une composition de liant hydraulique comprenant 85% en poids de laitier granulé de haut fourneau ayant une finesse de particules de 5800 cm$^2$/g, 13% en poids d'un gypse de synthèse correspondant à une teneur équivalente en $SO_3$ de 6,1% en poids, 1% en poids de ciment Portland et 0,5% en poids d'acétate de calcium, l'ensemble de ces teneurs étant exprimées sur la base du poids total de la composition de liant hydraulique.

Dans la demande JP H 10231165, il est divulgué une composition cimentaire exemplifiée comprenant 40% en poids d'un laitier granulé de haut fourneau moulu, 20% en poids d'anhydrite de sulfate de calcium, 5% en poids de ciment Portland et 35% de poids de ciment fondu (CAC) comprenant de l'aluminate monocalcique. Du carbonate de lithium est ajouté à ce liant.

Dans la demande EP 1975135 il est divulgué une composition de liant hydraulique comprenant 83,2% en poids d'un laitier granulé de haut fourneau moulu, 13% en poids de sulfate de calcium, 1,3% en poids de clinker Portland et 1,5% en poids d'oxyde de calcium, 0,5% en poids de l'alumine et 0,5% de poids d'acétate de calcium.

Bien que ce liant présente des teneurs réduites en ciment Portland, celui-ci reste à améliorer, notamment en terme de vitesse de prise et de durcissement.

Ainsi, il existe un besoin de mettre à disposition un liant hydraulique à base de laitier de haut fourneau permettant de remédier en tout ou partie aux inconvénients sus-cités de l'art antérieur.

En particulier, il existe un besoin de mettre au point un liant hydraulique à base de laitier de haut fourneau présentant une vitesse de prise et de durcissement améliorée, par rapport au liant hydraulique de la demande US 6,409,820, et permettant d'obtenir un matériau de construction possédant notamment à court terme des propriétés mécaniques améliorées. Dans le cadre de la présente demande, les propriétés mécaniques à court terme sont mesurées généralement à partir de 24 heures et jusqu'à 28 jours, à compter de la préparation du matériau de construction.

L'utilisation d'un liant hydraulique disposant de telles propriétés peut être avantageuse pour de nombreuses applications dans le domaine de la construction pour fabriquer des bétons ou mortiers pour lesquels une remise en service rapide de l'ouvrage est attendue, avec un certain niveau de résistance mécanique à atteindre à une échéance donnée.

Par exemple, un tel liant hydraulique peut être utilisé pour fabriquer des mortiers de fixation tels que les mortiers-colle, ou des mortiers de jointement, pour lesquels une adhésion ou un jointement, rapide et efficace est souhaité.

L'utilisation d'un tel liant hydraulique peut aussi être souhaitée pour fabriquer des mortiers de lissage notamment des enduits de sol, pour lesquels on désire réduire le délai d'ouverture à la marche. Les qualités recherchées pour un enduit de lissage sont entre autres définies dans les spécifications du Centre Scientifique et Technique du Bâtiment (CSTB) relatifs aux enduits de sol.

L'utilisation d'un tel liant hydraulique peut aussi être souhaitée pour fabriquer des mortiers de réparation ou de rebouchage, capables de combler rapidement et efficacement les défauts (fissures, trous) à la surface d'un matériau de construction tel que le béton, la brique, ou le plâtre.

Il existe par ailleurs un besoin de disposer d'un liant hydraulique présentant en outre un impact environnemental et sanitaire réduit par rapport au ciment Portland, permettant ainsi d'obtenir un matériau de construction plus respectueux de l'homme et de l'environnement. En particulier, on souhaite pouvoir formuler à partir d'un tel liant un matériau de construction, pouvant être manipulé, transporté ou fabriqué sans mettre en place de dispositifs de sécurité particulier.

Il existe également un besoin de fournir un liant hydraulique peu sensible ou insensible aux agents extérieurs, tels que l'eau et l'humidité, permettant de fabriquer un matériau de construction durable, résistant notamment aux expositions répétées et/ou prolongées à de tels agents.

Enfin, il existe un besoin d'obtenir un matériau de construction, tel qu'un béton ou mortier, présentant un ou plusieurs des avantages sus-cités, et satisfaisant en outre aux critères de performances mécaniques notamment à court terme, d'adhérence et/ou d'aptitude à l'emploi (homogénéité de mélange, fluidité pour l'étalement ou l'auto-étalement) souhaités au regard de l'utilisation visée.

De manière surprenante, il a été découvert qu'un liant hydraulique selon l'invention tel que défini plus bas, permettait de répondre en tout ou partie aux besoins sus-cités.

En particulier, il a été découvert que l'association d'au moins un sulfate de calcium, d'au moins un produit choisi parmi une source de clinker Portland et de la chaux, d'au moins un dérivé d'aluminium particulier et d'au moins un sel de métal alcalin ou alcalino-terreux particulier, tels que définis plus précisément ci-après, permettait d'obtenir une meilleure activation d'un laitier granulé de haut fourneau, conduisant de fait à un liant hydraulique présentant une vitesse de prise et de durcissement dans l'eau améliorée par rapport à l'art antérieur.

Le liant hydraulique selon l'invention est par ailleurs respectueux de l'homme et de l'environnement, notamment au regard du ciment Portland. De fait, le liant hydraulique selon l'invention permet d'obtenir un matériau de construction présentant ces mêmes avantages.

En outre, grâce à son pouvoir hydraulique, le liant hydraulique selon l'invention permet d'obtenir un matériau de construction capable de développer rapidement, des propriétés mécaniques satisfaisantes (dureté, résistance à la flexion, résistance à la compression, et/ou adhérence).

Il a été constaté notamment qu'il était possible d'obtenir à partir d'un liant hydraulique selon l'invention un matériau de construction présentant une bonne aptitude à l'emploi (homogénéité de mélange et/ou facilité de mise en œuvre), après mélange de ses ingrédients avec de l'eau.

Il a aussi été constaté qu'il était possible d'obtenir à partir d'un liant hydraulique selon l'invention un matériau de construction durable ou stable dans le temps.

En particulier, les propriétés mécaniques du matériau de construction selon l'invention sont peu ou pas dégradées au cours du temps, même après un contact prolongé avec de l'eau. Le matériau de construction est donc particulièrement adapté à être utilisé dans des applications dans lesquelles le matériau est susceptible d'être soumis à un contact prolongé ou répété avec de l'eau (pluie) ou un taux élevé d'humidité (supérieure ou égale à 50% d'humidité relative).

En particulier, le matériau de construction selon l'invention présente une bonne résistance à la flexion.

En particulier, le matériau de construction selon l'invention présente une bonne stabilité dimensionnelle dans le temps.

Il a été constaté notamment qu'il était possible d'obtenir un mortier ou enduit de lissage notamment pour le sol, possédant d'excellentes propriétés mécaniques à court terme (résistance à la flexion, résistance à la compression) tout en ayant de bonnes propriétés d'auto-étalement et de stabilité dimensionnelle, dans le temps.

La présente invention a donc pour objet en premier lieu une composition de liant hydraulique comprenant :

    a) au moins 50% en poids par rapport au poids de la composition de liant hydraulique, d'un laitier granulé de haut fourneau moulu,
    b) au moins du sulfate de calcium,
    c) au moins un produit choisi parmi une source de clinker Portland et de la chaux,
    d) au moins un dérivé d'aluminium choisi parmi une alumine possédant une surface spécifique BET allant de 100 à 400 $m^2/g$, un aluminate monocalcique et un sulfoaluminate de calcium, et
    e) au moins un sel de métal alcalin ou alcalino-terreux choisi parmi les sels de chlorure, les sels de bromure, les sels de silicate, les sels de nitrate, les sels d'acide carboxylique tels que les sels d'acide monocarboxylique en $C_1$-$C_4$,

- la teneur totale en sulfate de calcium exprimée en teneur équivalente de $SO_3$ étant d'au moins 5% en poids par rapport au poids de la composition de liant hydraulique,
- la somme des teneurs des produits cités aux points c) et e) étant inférieure à 10% en poids par rapport au poids de la composition de liant hydraulique.

D'autres objets, caractéristiques et avantages de la présente invention apparaitront plus clairement à la lecture de la description et des exemples.

Dans la présente demande, en l'absence d'indication contraire :

- les quantités exprimées sous la forme de pourcentage correspondent à des pourcentages poids/poids,
- l'article indéfini « un(e) » utilisé pour désigner un ingrédient d'une composition selon l'invention (liant, matériau de construction), doit s'entendre comme «un(e) ou plusieurs » incluant ainsi le mélange de ces ingrédients. Il en est de même pour l'utilisation de l'article défini correspondant « l' », « le », « la » qui doit s'entendre comme incluant le mélange de plusieurs de ces ingrédients. Par exemple, on désigne par « un » laitier granulé de haut fourneau moulu, un laitier granulé de haut fourneau moulu ou un mélange de laitiers granulé de haut fourneau moulu.
- on désigne par « finesse Blaine » ou « surface spécifique Blaine », la surface spécifique d'un composé solide pulvérulent, exprimée en $cm^2$ par gramme de solide, mesurée par la méthode de perméabilimétrie à l'air (ou méthode Blaine). Cette méthode est décrite par la norme NF EN 196-6.
- on désigne indifféremment les termes « liant hydraulique » et « composition de liant hydraulique » dans la présente demande. De même, on désigne indifféremment les termes « matériau de construction » et « composition de matériau de construction ».

La composition de liant hydraulique selon l'invention comprend au moins 50% en poids de laitier granulé de haut fourneau moulu par rapport au poids de ladite composition.

Le laitier granulé de haut fourneau moulu utilisable selon l'invention se présente sous forme de particules.

La taille maximale des particules du laitier granulé de haut fourneau moulu utilisable selon l'invention est de préférence inférieure à 45$\mu$m.

Cette taille maximale des particules du laitier granulé de haut fourneau moulu utilisable selon l'invention est déterminée de manière bien connue de l'homme du métier par analyse granulométrique laser.

En particulier, au moins 99% en volume des particules du laitier granulé de haut fourneau moulu utilisable selon l'invention font de préférence moins de 32 $\mu$m.

Plus particulièrement, au moins 50% en volume desdites particules font de préférence moins de 10 $\mu$m et plus préférentiellement moins de 5,5$\mu$m. Ces particules présentent donc un diamètre moyen D50 de préférence inférieur à 10 $\mu$m et plus préférentiellement inférieur à 5,5$\mu$m.

L'analyse granulométrique de la taille moyenne en volume des particules du laitier granulé de haut fourneau moulu utilisable selon l'invention peut être réalisée de manière bien connue de l'homme du métier par analyse granulométrique laser.

La surface spécifique Blaine du laitier granulé de haut fourneau moulu utilisable selon l'invention est de préférence supérieure ou égale à 5000 cm$^2$/g, et plus préférentiellement supérieure ou égale à 6000 cm$^2$/g. De manière encore plus préférée, la surface spécifique Blaine du laitier granulé de haut fourneau moulu utilisable selon l'invention va de 6500 à 9000 cm$^2$/g, et mieux encore de 7000 à 8000 cm$^2$/g.

La composition chimique du laitier granulé de haut fourneau moulu utilisable selon l'invention comprend de l'oxyde de calcium (CaO), de l'oxyde de magnésium (MgO), du dioxyde de silicium ou silice (SiO$_2$), et de l'oxyde d'aluminium (Al$_2$O$_3$), dans des teneurs telles que la somme des teneurs en oxyde de calcium, oxyde de magnésium et dioxyde de silicium représente au moins deux tiers en poids (66,7% en poids) du poids du laitier granulé de haut fourneau moulu, et le rapport pondéral de la somme des teneurs en oxyde de calcium et oxyde de magnésium sur la teneur en dioxyde de silicium (noté (CaO+MgO)/SiO$_2$) est supérieur à 1,0.

De préférence, le laitier granulé de haut fourneau moulu utilisable selon l'invention comprend en outre une phase vitreuse représentant au moins deux tiers en poids du laitier granulé de haut fourneau moulu utilisable selon l'invention.

Plus préférentiellement, le laitier granulé de haut fourneau moulu utilisable selon l'invention comprend au moins 90% en poids, et plus préférentiellement au moins 95% en poids de phase vitreuse, par rapport au poids du laitier granulé de haut fourneau moulu.

De préférence, la composition chimique du laitier granulé de haut fourneau moulu utilisable selon l'invention est telle que la somme des teneurs pondérales en oxyde de calcium (CaO), oxyde de magnésium (MgO), silice (SiO$_2$) et oxyde d'aluminium (Al$_2$O$_3$) est supérieure ou égale à 80% en poids, plus préférentiellement supérieure ou égale à 90% en poids, et mieux encore supérieure ou égale à 95% en poids, par rapport au poids du laitier granulé de haut fourneau moulu.

De préférence, la composition chimique du laitier granulé de haut fourneau moulu utilisable selon l'invention comprend moins de 39% en poids de silice, moins de 15% en poids d'oxyde d'aluminium (Al$_2$O$_3$), plus de 37% en poids d'oxyde de calcium (CaO), et moins de 13% en poids d'oxyde de magnésium (MgO), par rapport au poids du laitier granulé de haut fourneau moulu.

Plus préférentiellement, la composition chimique du laitier granulé de haut fourneau moulu utilisable selon l'invention comprend de 33 à 37% en poids de silice (SiO$_2$), de 9 à 14% en poids d'oxyde d'aluminium (Al$_2$O$_3$), de 38 à 42% en poids d'oxyde de calcium (CaO), et de 1 à 12% en poids de magnésie (MgO), par rapport au poids du laitier granulé de haut fourneau moulu.

Mieux encore, la composition chimique du laitier granulé de haut fourneau moulu utilisable selon l'invention comprend en outre moins de 1% en poids de Fe$_2$O$_3$, moins de 2% en poids de TiO$_2$, jusqu'à 2,5% en poids de SO$_3$ et jusqu'à 2% en poids d'ions sulfure (S$_2^-$), par rapport au poids total de laitier granulé de haut fourneau moulu.

Les quantités d'oxyde de calcium, de magnésie, d'alumine et de silice présents dans le laitier granulé de haut fourneau moulu utilisable selon l'invention, satisfont de préférence au moins à l'une des trois relations suivantes:

$$-r1 = \frac{(CaO+MgO)}{(Al2O3+SiO2)} > 1{,}03$$

$$-r2\ (F11) = \frac{(CaO+MgO+0{,}3*Al2O3)}{(SiO2+0.7*Al2O3)} > 1{,}20$$

$$-r3\ (F3) = \frac{(CaO+MgO+Al2O3)}{(SiO2)} \geq 1{,}6,$$

et la teneur en oxyde d'aluminium (Al$_2$O$_3$) étant inférieure à 13% en poids du poids de laitier granulé de haut fourneau moulu,

r1, r2 et r3 correspondant aux rapports pondéraux relatifs aux quantités d'oxyde de calcium, de magnésie, d'alumine et de silice, présentes dans le laitier granulé de haut fourneau moulu.

Plus préférentiellement, les quantités d'oxyde de calcium, de magnésie, d'alumine et de silice présents dans le laitier granulé de haut fourneau moulu satisfont les trois relations r1, r2 et r3 définies ci-dessus.

Le laitier granulé de haut fourneau moulu utilisable selon l'invention peut être obtenu de manière bien connue de l'homme du métier. Le laitier de haut fourneau est un sous-produit de la production de fonte qui est obtenue par fusion de minerais de fer dans un haut fourneau à une température supérieure à la température de fusion de la fonte et du laitier, par exemple supérieure à 1500-1600°C. Le laitier de haut fourneau et la fonte sont séparés par différence de densité à l'état liquide. Puis le laitier de haut fourneau va subir un refroidissement rapide qui va vitrifier le laitier de haut fourneau. Le laitier de haut fourneau vitrifié ainsi obtenu, est couramment désigné sous l'appellation « laitier granulé de haut fourneau ». Celui-ci est ensuite séché et broyé pour obtenir un laitier granulé de haut fourneau moulu ayant la finesse et/ou granulométrie désirée(s).

Le laitier granulé de haut fourneau moulu utilisable selon l'invention peut être issu directement ou indirectement du procédé de préparation sus-décrit. En particulier, le laitier granulé de haut fourneau moulu utilisable selon l'invention peut résulter d'un cobroyage de deux ou plusieurs laitiers granulés de haut fourneau, du mélange de deux ou plusieurs laitiers granulés de haut fourneau moulus, ou faire l'objet d'ajustement quant à sa composition par ajouts d'oxyde métallique, recuisson dans le haut fourneau puis trempe, comme enseigné dans la demande CA 1,131,664.

La composition de liant hydraulique selon l'invention comprend de préférence une teneur totale en laitier(s) granulé(s) de haut fourneau moulu(s) allant de 50 à 90% en poids, et plus préférentiellement de 60 à 70% en poids, par rapport au poids de la composition de liant hydraulique.

La composition de liant hydraulique selon l'invention comprend au moins du sulfate de calcium dans une teneur particulière.

De manière générale, le terme sulfate de calcium (noté généralement $CaSO_4$) couvre le sulfate de calcium sous n'importe laquelle de ses formes hydratée ou non hydratée, et les différents mélanges desdites formes hydratée ou non hydratée.

Ainsi, le sulfate de calcium utilisable selon l'invention peut-être choisi parmi le sulfate de calcium anhydre (ou anhydrite) (noté généralement $CaSO_4$ anhydre), le sulfate de calcium semihydrate (hémi hydrate ou bassanite) (noté généralement $CaSO_4 \times 0,5H_2O$), le sulfate de calcium dihydrate (ou gypse) ($CaSO_4.2H_2O$), et les mélanges de ces composés.

De préférence, le sulfate de calcium utilisable selon l'invention comprend au moins 90% en poids, et plus préférentiellement au moins de 95% en poids de sulfate de calcium anhydre par rapport au poids de sulfate de calcium. Mieux encore, le sulfate de calcium utilisable selon l'invention est du sulfate de calcium anhydre.

Le sulfate de calcium utilisable selon l'invention possède de préférence un pH supérieur ou égale à 7, plus préférentiellement supérieur ou égale à 8, et mieux encore supérieur ou égale à 11.

Le sulfate de calcium utilisable selon l'invention peut être d'origine naturelle ou synthétique.

En particulier, le sulfate de calcium utilisable selon l'invention peut être obtenu par voie de synthèse comme sous-produit de la fabrication d'un acide minéral (acide borique, acide fluorhydrique, acide phosphorique), d'un acide organique (acide citrique, acide tartrique) ou d'oxyde de titane. Il peut également être obtenu par désulfuration de gaz et fumées.

La teneur pondérale totale en sulfate de calcium présent dans la composition de liant hydraulique selon l'invention est exprimée en teneur pondérale équivalente de $SO_3$. Le sulfate de calcium présent dans la composition de liant hydraulique de l'invention peut éventuellement être amené en partie par d'autres ingrédients du liant hydraulique, en particulier lorsque la source de clinker Portland est un ciment (Portland, composé ou pouzzolanique) tel que décrit ultérieurement. Toutefois, la teneur totale en sulfate de calcium présent dans la composition de liant hydraulique selon l'invention, exprimée en teneur de $SO_3$, doit être supérieure à 5% en poids par rapport au poids du liant hydraulique, pour atteindre rapidement des propriétés mécaniques satisfaisantes sur le produit durci.

De préférence, la composition de liant hydraulique selon l'invention comprend une teneur pondérale totale en sulfate de calcium exprimée en teneur pondérale équivalente de $SO_3$ allant de 5 à 25% en poids, et plus préférentiellement de 13 à 20% en poids, par rapport au poids de la composition de liant hydraulique.

La composition de liant hydraulique selon l'invention comprend au moins un produit choisi parmi une source de clinker Portland, de la chaux, et leur mélange.

La source de clinker Portland utilisable selon l'invention peut être choisie parmi un clinker Portland, un ciment Portland, un ciment Portland composé, un ciment pouzzolanique, et leurs mélanges.

En particulier, on peut utiliser, à titre de source de clinker Portland, un clinker Portland comprenant :

- au moins les phases minéralogiques cristallisées suivantes :

    - silicates tricalcique et silicate bicalcique ($3CaO.SiO_2$ et $2CaO.SiO_2$ - notés respectivement $C_3S$ et $C_2S$),

- ferroaluminate tétracalcique (Al$_2$O$_3$.Fe$_2$O$_3$.4CaO - noté C$_4$AF),
- et éventuellement de l'aluminate tricalcique (Al$_2$O$_3$.3CaO - noté C$_3$A),

dans des teneurs telles que :

- les phases minéralogiques cristallisées C$_3$S et C$_2$S représentent au moins deux tiers du poids du poids du clinker Portland,
- les teneurs totales en oxyde de calcium et en silice sont telles que le rapport pondéral (CaO)/(SiO$_2$) est supérieur ou égale à 2,

- et éventuellement de l'oxyde de magnésium (MgO) dans une teneur inférieure ou égale à 5 % en poids du poids du clinker Portland.

De préférence, le rapport pondéral (CaO)/(SiO$_2$) est supérieur ou égale à 3.

De préférence, la teneur en oxyde de magnésium est inférieure ou égale à 1% en poids du poids du clinker Portland.

Le clinker Portland peut comprendre en outre un ou plusieurs des éléments chimiques suivants : fluorure de phosphore (PF), dioxyde de titane (TiO$_2$), oxyde de manganèse (MnO), oxyde de sodium (Na$_2$O), pentoxyde de phosphore (P$_2$O$_5$), oxyde de strontium (SrO).

En particulier, on peut utiliser, à titre de source de clinker Portland, un ciment Portland de type CEM I tel que défini par la norme NF EN 197-1. Un tel ciment comprend au moins 95% en poids de clinker Portland, par rapport au poids dudit ciment. Le clinker Portland est de préférence tel que défini dans l'un quelconque des paragraphes de la présente demande. Plus préférentiellement, on utilise un ciment Portland de type CEM I 52.5 R tel que défini par la norme NF EN 197-1.

En particulier, on peut utiliser, à titre de source de clinker Portland, un ciment Portland composé de type CEM II tel que défini par la norme NF EN 197-1. Un tel ciment comprend de 65 à 94% en poids de clinker Portland, par rapport au poids dudit ciment. Le clinker Portland est de préférence tel que défini dans l'un quelconque des paragraphes de la présente demande.

En particulier, on peut utiliser, à titre de source de clinker Portland, un ciment pouzzolanique de type CEM IV tel que défini par la norme NF EN 197-1. Un tel ciment comprend de 45 à 89% en poids de clinker Portland, par rapport au poids dudit ciment. Le clinker Portland est de préférence tel que défini dans l'un quelconque des paragraphes de la présente demande.

En particulier, on peut utiliser, à titre de source de clinker Portland, un ciment composé de type CEM V tel que défini par la norme NF EN 197-1. Un tel ciment comprend de 20 à 64% en poids de clinker Portland, par rapport au poids dudit ciment. Le clinker Portland est de préférence tel que défini dans l'un quelconque des paragraphes de la présente demande.

Les ciments décrits ci-dessus comprennent en principe du sulfate de calcium en une teneur exprimée en teneur équivalente de SO$_3$ inférieure ou égale à 4% en poids du poids dudit ciment.

Selon un mode de réalisation plus préféré, le clinker Portland, utilisable selon l'invention ou contenu dans les ciments utilisables selon l'invention, comprend en plus des phases minéralogiques cristallisées citées précédemment au moins les phases minéralogiques cristallisées suivantes C$_3$S, C$_2$S, C$_4$AF, C$_3$A et K$_2$SO$_4$ (Arcanite).

Plus préférentiellement, les teneurs pondérales en phases minéralogiques C$_3$S, C$_2$S, C$_4$AF, C$_3$A, K$_2$SO$_4$, présentes dans le clinker Portland sont telles que la source de clinker Portland comprend :

- de 60 à 70% en poids de C$_3$S,
- de 5 à 15% en poids de C$_2$S,
- de 2 à 6% en poids de C$_4$AF,
- de 5 à 15% en poids de C$_3$A,
- de 0,1 à 2% de K$_2$SO$_4$ (Arcanite),

par rapport au poids de la source de clinker Portland.

Parmi les sources de clinker Portland utilisables selon l'invention, on préfère utiliser un ciment Portland CEM I 52.5 R. A titre d'exemple, un tel ciment peut comprendre :

- de 3 à 4% de sulfate de calcium exprimé en % en poids de SO$_3$ dans le ciment, et
- de 60 à 70% en poids de C$_3$S,
- de 5 à 15% en poids de C$_2$S,
- de 2 à 6% en poids de C$_4$AF,

- de 5 à 15% en poids de $C_3A$,
- de 0,1 à 2% en poids de $K_2SO_4$ (Arcanite),

par rapport au poids dudit ciment.

Le sulfate de calcium présent dans le ciment Portland CEM I 52.5R peut être choisi parmi le gypse, l'hémi hydrate, l'anhydrite, et leur mélange.

De préférence, la teneur en sulfate de calcium présente dans le ciment Portland CEM I 52.5R exprimée en teneur en $SO_3$ va de 3,5 à 4% en poids du poids dudit ciment.

La chaux utilisable selon l'invention peut être choisie parmi la chaux vive (CaO) et la chaux éteinte ($Ca(OH)_2$).

De préférence, la composition de liant hydraulique selon l'invention comprend au moins une source de clinker Portland.

La composition de liant hydraulique selon l'invention comprend de préférence une teneur totale en produit(s) choisi(s) parmi une source de clinker Portland, de la chaux, et leur mélange, inférieure à 5% en poids, plus préférentiellement, allant de 0,2 à 4% en poids, et mieux encore allant de 0,4 à 1,8% en poids, par rapport au poids total de la composition de liant hydraulique.

La composition de liant hydraulique selon l'invention comprend au moins un dérivé d'aluminium choisi parmi une alumine ayant une surface spécifique BET allant de 100 à 400 mètre carré par gramme ($m^2/g$), un aluminate monocalcique et un sulfoaluminate de calcium.

Le dérivé d'aluminium utilisable selon l'invention se présente sous la forme de particules.

L'alumine utilisable en tant que dérivé d'aluminium possède de préférence une surface spécifique BET allant de 250 à 350$m^2/g$. En particulier, on peut utiliser une alumine de transition (alumine flash) présentant une telle surface spécifique.

La surface spécifique BET est déterminée par adsorption d'azote, conformément à la norme ISO 9277:2010.

L'aluminate monocalcique utilisable en tant que dérivé d'aluminium peut être apporté dans la composition de liant hydraulique selon l'invention par un ciment d'aluminate de calcium (CAC) comprenant de l'aluminate monocalcique. Dans ce cas, on utilise de préférence un ciment d'aluminate de calcium dont la teneur en alumine (exprimée en $Al_2O_3$) est d'au moins 35% en poids, plus préférentiellement d'au moins 45% du poids, de manière davantage préférée d'au moins 55% en poids, par rapport au poids du ciment d'aluminate de calcium. Mieux encore, on utilise un ciment d'aluminate de calcium dont la teneur en alumine représente de 65 à 75% en poids dudit ciment.

Le sulfoaluminate de calcium utilisable en tant que dérivé d'aluminium est de préférence la yeelemite (4CaO, $3Al_2O_3$, $SO_3$).

La yeelimite peut être apportée dans la composition de liant hydraulique selon l'invention par un ciment sulfoaluminate de calcium (dit « CSA ») comprenant de la yeelemite. Dans ce cas, on utilise de préférence un ciment sulfoaluminate de calcium dont la teneur en yeelimite est d'au moins 10 % en poids, plus préférentiellement d'au moins 50 % en poids, et de manière davantage préférée d'au moins 60% du poids, par rapport au poids du ciment sulfoaluminate de calcium. Mieux encore, on utilise un ciment sulfoaluminate de calcium dont la teneur en yeelemite représente au moins 65% en poids du poids dudit ciment.

La composition de liant hydraulique selon l'invention comprend de préférence de 0,2 à 2,1% en poids, et plus préférentiellement de 0,3 à 0,8% en poids, d'au moins un dérivé d'aluminium tel que défini précédemment, par rapport au poids de la composition de liant hydraulique.

La composition de liant hydraulique selon l'invention comprend au moins un sel de métal alcalin ou alcalino-terreux (Na, Ca, K, Li), minéral ou organique, choisi parmi les sels de chlorure, les sels de bromure, les sels de silicate, les sels de nitrate, les sels d'acide carboxylique tels que les sels d'acide monocarboxylique en $C_1$-$C_4$.

De préférence, on utilise parmi les sels de métal alcalin ou alcalino-terreux, tels que définis précédemment du chlorure de calcium ($CaCl_2$), du formiate de calcium et/ou de l'acétate de calcium.

La composition de liant hydraulique selon l'invention comprend de préférence une teneur totale en sel(s) de métal alcalin ou alcalino-terreux, tel(s) que défini(s) précédemment, inférieure à 5% en poids, plus préférentiellement allant de 1 à 4% en poids, et mieux encore allant de 1,1 à 3,2% en poids, par rapport au poids total de la composition de liant hydraulique.

La composition de liant hydraulique selon l'invention se présente sous la forme d'une poudre et est obtenue par simple mélange de ses ingrédients qui se présentent eux-mêmes sous la forme de solides à l'état pulvérulent.

La présente invention a également pour objet en second lieu une composition de matériau de construction prête-à-gâcher comprenant :

- un liant hydraulique selon l'invention et
- des granulats de matériaux inertes, susceptibles d'être agglomérés en phase aqueuse au moyen dudit liant pour former un agrégat.

Par « prête-à-gâcher », on entend que la composition selon l'invention est destinée à être mélangée avec de l'eau juste avant ou au moment de son emploi, en vue de la préparation d'un matériau de construction tel qu'un mortier ou béton, et notamment un mortier colle, mortier joint, mortier ou enduit de lissage. De préférence, le taux de gâchage utilisé est tel que défini plus bas.

La composition de matériau de construction prête-à-gâcher selon l'invention comprend de préférence une teneur en liant hydraulique allant de 15 à 75% en poids, et plus préférentiellement de 20 à 50% en poids, par rapport au poids de ladite composition prête-à-gâcher.

De préférence, la teneur totale en produits cités en c) et e) précédemment est inférieure ou égale à 1% en poids par rapport au poids de la composition de matériau de construction prête-à-gâcher.

Les granulats de matériaux inertes utilisables selon l'invention peuvent être des fillers, du sable, des gravillons tels que définis par la norme NF-EN 12-620 (2008) ou NF-EN 13-139 (2003).

De préférence, la taille desdits granulats varie de 1 $\mu$m à 8 mm.

A titre de granulats de matériaux inertes utilisables selon l'invention, on peut utiliser par exemple des granulats calcaires ou siliceux ou silico-calcaires.

De préférence, on utilise des fillers calcaires et/ou des sables siliceux.

La composition de matériau de construction prête-à-gâcher selon l'invention comprend de préférence une teneur en granulats de matériaux inertes allant de 25 à 85% en poids, et plus préférentiellement de 50 à 80% en poids, par rapport au poids de ladite composition prête-à-gâcher.

La composition de matériau de construction prête-à-gâcher selon l'invention comprend de préférence en outre au moins un polymère.

Le polymère utilisable selon l'invention peut être sous forme de poudre dispersable dans l'eau ou de dispersion solide-liquide dans de l'eau (c'est-à-dire sous forme d'une dispersion aqueuse de polymère).

Lorsque le polymère est sous forme de poudre dispersable dans l'eau, il est de préférence choisi parmi les copolymères d'acétate de vinyle, versatate de vinyle et d'éthylène.

De tels polymères sont disponibles commercialement auprès des sociétés Wacker, Hexion et Elotex.

A titre d'exemple, on peut citer notamment:

- les copolymères d'acétate de vinyle, de versatate de vinyle et d'ester maléïque, disponibles sous forme de poudre auprès de la société Hexion sous la dénomination Axilat® UP 620E,
- les copolymères d'acétate de vinyle, de versatate de vinyle et d'éthylène, disponibles sous forme de poudre auprès de la société Elotex sous la dénomination Elotex® FL3200 ou FX3300,
- les copolymères d'acétate de vinyle et d'éthylène, disponibles sous forme de poudre auprès de la société Wacker sous la dénomination Vinnapas® 5011L ou Vinnapas® 4023N.

La teneur en polymère sous forme de poudre dispersable dans l'eau utilisable dans la composition de matériau de construction prête-à-gâcher selon l'invention est de préférence inférieure ou égale à 10% en poids par rapport au poids de ladite composition prête-à-gâcher selon l'invention.

Lorsque le polymère est sous forme de dispersion solide-liquide dans l'eau, il est de préférence choisi parmi les dispersions aqueuses styrène-butadiène, styrène-acrylique, styrène-acrylate, acrylique, acétate de vinyle, acétate de vinyle et d'éthylène, et versatate de vinyle et d'éthylène.

De telles dispersions de polymère dans l'eau sont disponibles commercialement auprès des sociétés Rohm & Haas, BASF et Synthomer.

A titre d'exemple, on peut citer notamment:

- les copolymères d'ester d'acide acrylique et de styrène, sous forme de dispersion aqueuse disponibles auprès de la société BASF sous la dénomination Acronal® DS 5018 (à 50% en poids de solide dans l'eau),
- les copolymères de styrène-butadiène carboxylé, disponibles sous forme de dispersion aqueuse auprès de la société Synthomer, sous les dénominations Lipaton® SB 29Y141 (à 47% en poids de solide dans l'eau) et Lipaton® SB 29Y146 (à 47% en poids de solide dans l'eau).

La teneur en dispersion aqueuse de polymère utilisable dans la composition de matériau de construction prête-à-gâcher selon l'invention peut représenter jusqu'à 20% en poids du poids total de ladite composition prête-à-gâcher selon l'invention.

La teneur en polymère dans la dispersion aqueuse peut représenter 30 à 60% en poids sec, et de préférence 40 à 55% en poids sec, du poids total de ladite dispersion aqueuse.

La composition de matériau de construction prête-à-gâcher selon l'invention peut également comprendre au moins un adjuvant choisi parmi des plastifiants ou superplastifiants, des agents anti-mousse, des agents entraîneurs d'air, des agents hydrofuges, des agents rétenteur d'eau ou agent de rhéologie, des retardateurs de prise ou de durcissement, des colorants, et les mélanges de ces composés.

Ces adjuvants peuvent être à l'état solide ou liquide, par exemple sous forme de poudre ou de dispersion aqueuse.

De préférence, ces adjuvants se présentent sous la forme de poudre.

La composition de matériau de construction prête-à-gâcher selon l'invention peut être un produit monocomposant lorsqu'elle ne comprend pas d'ingrédient liquide composé notamment d'eau. Dans ce cas, les ingrédients de la composition prête-à-gâcher selon l'invention peuvent être stockés dans un même container, par exemple la forme d'un sac de poudre, avant d'être mélangés avec de l'eau pour former le matériau de construction.

La composition de matériau de construction prête-à-gâcher selon l'invention est en général un produit bicomposant lorsqu'elle comprend au moins un ingrédient liquide. Dans ce cas, les ingrédients liquides sont stockés séparément des autres ingrédients (solides pulvérulents) de la composition prête-à-gâcher selon l'invention, et ne sont mélangés qu'au moment de l'emploi au cours de l'étape de gâchage avec de l'eau. Le procédé de mise en œuvre de la composition prête-à-gâcher selon l'invention est décrit davantage plus bas.

Selon une variante de réalisation préférée de l'invention, la composition de matériau de construction prête-à-gâcher selon l'invention est un produit monocomposant constitué d'une composition pulvérulente (notée A')) comprenant :

- un liant hydraulique selon l'invention,
- des granulats de matériaux inertes, susceptibles d'être agglomérés en phase aqueuse au moyen dudit liant pour former un agrégat,
- au moins un polymère sous forme de poudre dispersable dans l'eau tel que décrit précédemment, et
- éventuellement au moins un adjuvant sous forme de poudre tel que décrit précédemment.

Les teneurs pondérales en ingrédients décrits précédemment restent applicables à cette variante de réalisation préférée de la composition de matériau de construction prête-à-gâcher selon l'invention.

Selon une autre variante de réalisation de l'invention, la composition de matériau de construction est un produit bicomposant constitué :

- d'une composition pulvérulente (notée A)) comprenant :

  - un liant hydraulique selon l'invention,
  - des granulats de matériaux inertes, susceptibles d'être agglomérés en phase aqueuse au moyen dudit liant pour former un agrégat,

- d'une composition liquide (notée B)) comprenant :

  - au moins une dispersion aqueuse de polymère, telle que décrite précédemment, et
  - éventuellement au moins un adjuvant liquide tel que décrit précédemment.

La composition pulvérulente A) du produit bicomposant selon l'invention peut comporter en outre au moins un polymère sous forme de poudre dispersable dans l'eau tel que décrit précédemment, et/ou au moins un adjuvant sous forme de poudre tel que décrit précédemment.

Les teneurs pondérales en ingrédients décrits précédemment restent applicables à cette variante de réalisation préférée de la composition de matériau de construction prête-à-gâcher selon l'invention.

Dans chacune des deux variantes de réalisation sus-décrites, la composition pulvérulente du produit mono ou bicomposant peut être obtenue par mélange simultané des ingrédients du liant hydraulique avec les granulats de matériaux inertes et les autres ingrédients pulvérulents présents ou éventuellement présents dans ladite composition.

La présente invention a pour objet en troisième lieu un procédé de mise en oeuvre d'une composition de matériau de construction prête-à-gâcher selon l'invention, comprenant une étape de gâchage (ou mélange) de ladite composition avec de l'eau, en vue de la préparation d'un matériau de construction, tel qu'un béton ou mortier, et notamment un mortier colle, mortier joint, ou mortier ou enduit de lissage.

En particulier, on peut préparer le matériau de construction à partir d'un produit monocomposant ou bicomposant, tel que décrit précédemment.

Lorsque le matériau de construction est préparé à partir d'un produit monocomposant, ledit produit est mélangé avec de l'eau.

Lorsque le matériau de construction est préparé à partir d'un produit bicomposant, les ingrédients liquides dudit produit (composition liquide B) sont mélangés avec de l'eau avant que l'ensemble soit mélangé avec les ingrédients non liquides dudit produit (composition pulévrulente A).

A l'issue de ces étapes de mélange, on obtient une pâte homogène qui va progressivement se rigidifier au contact de l'eau. Au bout de 24 heures, on obtient un produit suffisamment dur pour en évaluer les propriétés mécaniques du matériau de construction.

Les étapes sus-décrites du procédé de préparation selon l'invention sont en général réalisées à température ambiante (23°C environ).

De préférence, le taux de gâchage est ajusté de manière à obtenir à l'issue du procédé de préparation, un produit de consistance désirée, facile à mettre en œuvre au vue de l'utilisation visée.

Le taux de gâchage correspond au rapport pondéral de la quantité d'eau utilisée pour préparer le matériau de construction selon l'invention sur la somme des quantités des matières sèches utilisées pour préparer le matériau de construction selon l'invention.

L'eau utilisée pour préparer le matériau de construction selon l'invention correspond à l'eau ajoutée à la composition de matériau de construction prête-à-gâcher selon l'invention, et le cas échéant, à l'eau des ingrédients liquides de ladite composition.

Les matières sèches utilisées pour préparer le matériau de construction selon l'invention correspondent aux ingrédients non liquides de la composition de matériau de construction prête-à-gâcher selon l'invention, et le cas échéant, à l'extrait sec des ingrédients liquides de ladite composition.

On peut utiliser un taux de gâchage allant de 0,1 à 0,4.

De préférence, le taux de gâchage va de 0,1 à 0,3, correspondant au mélange de 10 à 30 grammes d'eau avec 100 grammes d'ingrédients solides pulvérulents.

Le matériau de construction ainsi obtenu est facile à mettre en œuvre.

Il peut être utilisé notamment comme :

- mortier de fixation, en particulier, un mortier-colle, destiné à la pose de carrelage tel que des carreaux de céramique ou de verre;
- mortier de jointement, destiné à remplir des interstices entre différents éléments de maçonnerie ou de carrelage,
- mortier ou enduit de lissage pour le sol, mur ou plafond, tel qu'un enduit auto-lissant ou auto-nivellant pour sol.
- mortier de réparation ou de rebouchage, destiné au comblement de fissures ou de cavités à la surface d'un matériau de construction de composition identique ou différente, essentiellement minérale, tel que le béton, la brique, ou le plâtre.

Les exemples suivants sont donnés à titre purement illustratif de l'invention et ne sauraient être interprétés pour en limiter la portée.

**Exemples** : **Enduits de lissage de sol:**

On prépare cinq compositions pulvérulentes prête-à-gâcher à partir de cinq liants hydrauliques différents, en mélangeant les différents ingrédients du tableau 1 ci-dessous.

Le liant hydraulique 1 (selon l'invention) est préparé en mélangeant :

a) 20g de laitier granulé de haut fourneau moulu utilisé selon l'invention (représentant 64,3% en poids du poids du liant),
b) 10g de sulfate de calcium de synthèse à au moins 90% en poids de sulfate de calcium anhydre selon l'invention (représentant 32,2% en poids du poids du liant, et correspondant à 18,9% en poids de $SO_3$ par rapport au poids du liant),
c) 0,20g de ciment Portland CEM I 52.5 R (représentant 0,6% en poids du poids du liant),
d) 0,1g d'alumine flash de surface spécifique BET allant de 100 à 400 $m^2/g$ (représentant 0,3% en poids du poids du liant),
e) 0,8g de $CaCl_2.2H_2O$ (représentant 2,6% en poids du poids du liant).

Le liant hydraulique 2 (comparatif) est préparé en mélangeant :

a) 20,56g de laitier granulé de haut fourneau moulu utilisé selon l'invention (représentant 66,1% en poids du poids du liant),
b) 10,28g de sulfate de calcium de synthèse à au moins 90% en poids de sulfate de calcium anhydre selon l'invention (représentant 33,1% en poids du poids du liant, et correspondant à 19,4% en poids de $SO_3$ par rapport au poids du liant),
c) 0,26g de ciment Portland CEM I 52.5 R (représentant 0,8% en poids du poids du liant).

Le liant hydraulique 3 (comparatif) est préparé en mélangeant :

a)20,48g de laitier granulé de haut fourneau moulu utilisé selon l'invention (représentant 65,8% en poids du poids du liant),

b)10,24g de sulfate de calcium de synthèse à au moins 90% en poids de sulfate de calcium anhydre selon l'invention (représentant 33% en poids du poids du liant, et correspondant à 19,4% en poids de $SO_3$ par rapport au poids du liant),

c)0,26g de ciment Portland CEM I 52.5 R (représentant 0,8% en poids du poids du liant),

d)0,13g d'alumine flash de surface spécifique BET allant de 100 à 400 m²/g (représentant 0,4% en poids du poids du liant).

Le liant hydraulique 4 (comparatif) est préparé en mélangeant :

a)19,9g de laitier granulé de haut fourneau moulu utilisé selon l'invention (représentant 64% en poids du poids du liant),

b)9,95g de sulfate de calcium de synthèse à au moins 90% en poids de sulfate de calcium anhydre selon l'invention (représentant 32% en poids du poids du liant, et correspondant à 18,9% en poids de $SO_3$ par rapport au poids du liant),

c)0,25g de ciment Portland CEM I 52.5 R (représentant 0,8% en poids du poids du liant),

e)1g de $CaCl_2.2H_2O$ (représentant 3,2% en poids du poids du liant).

Le liant hydraulique 5 est un produit commercial de référence composé à au moins 50% en poids de ciment Portland par rapport au poids de produit commercial.

Le laitier granulé de haut fourneau moulu utilisé dans les exemples de la présente demande présente les caractéristiques suivantes :

- Granulométrie : D50 = 5μm, taille maximale de particules < 45μm,
- Finesse : Surface spécifique Blaine = 7000-8000cm²/g,
- Pourcentage de phase vitreuse supérieur à 90% en poids du poids du laitier,
- Composition chimique du laitier comprenant :

    - 33 à 37% en poids de silice ($SiO_2$),
    - 9 à 13% en poids d'alumine ($Al_2O_3$),
    - 38 à 42% en poids d'oxyde de calcium (CaO),
    - 1 à 12% en poids de magnésie (MgO),
    - moins de 1% en poids de $Fe_2O_3$,
    - moins de 2% en poids de $TiO_2$,
    - jusqu'à 2,5% en poids de $SO_3$, et
    - jusqu'à 2% en poids d'ions sulfure ($S_2^-$)
    - et dont les teneurs pondérales en silice ($SiO_2$), alumine ($Al_2O_3$), oxyde de calcium (CaO), et oxyde de magnésium (MgO) satisfont les relations suivantes :

$$-r1 = \frac{(CaO+MgO)}{(Al2O3+SiO2)} > 1,03$$

$$-r2\ (F11) = \frac{(CaO+MgO+0,3*Al2O3)}{(SiO2+0.7*Al2O3)} > 1,20$$

$$-r3\ (F3) = \frac{(CaO+MgO+Al2O3)}{(SiO2)} \geq 1,6$$

- la somme des teneurs pondérales en CaO+MgO+$Al_2O_3$+$SiO_2 \geq$ 80% en poids, l'ensemble des pourcentages en poids indiqués ci-dessus étant exprimés sur la base du poids total du laitier granulé de haut fourneau moulu.

Les teneurs des ingrédients du tableau 1 ci-dessous sont exprimées en grammes.

**Tableau 1**

| Ingrédients | Ex1 (Invention) | Ex2 (Comparatif 1) | Ex3 (Comparatif 2) | Ex4 (Comparatif 3) | Ex5 (Comparatif 4) |
|---|---|---|---|---|---|
| Liant hydraulique 1 | 31,1 | - | - | - | - |
| Liant hydraulique 2 | - | 31,1 | - | - | - |
| Liant hydraulique 3 | - | - | 31,1 | - | - |
| Liant hydraulique 4 | - | - | - | 31,1 | - |
| Liant hydraulique 5 | - | - | - | - | 31,1 |
| Sable siliceux (0,1 - 0,3 mm) | 34,2 | 34,2 | 34,2 | 34,2 | 34,2 |
| Carbonate de calcium (D50 = 8 $\mu$m) | 32,6 | 32,6 | 32,6 | 32,6 | 32,6 |
| Polymère d'acétate de vinyle, de versatate de vinyle et d'éthylène sous forme de poudre | 2 | 2 | 2 | 2 | 2 |
| Ethers de cellulose, gommes, anti-mousse et colorants | 0,1 | 0,1 | 0,1 | 0,1 | 0,1 |
| Poids total de la composition pulvérulente | 100 | 100 | 100 | 100 | 100 |

Chacune de ces cinq compositions est ensuite gâchée avec de l'eau pour former un enduit de sol, à raison de 16g d'eau pour 100g de composition pulvérulente. Cela correspond à un taux de gâchage de 16% (soit 0,16).

Sauf indication contraire dans la présente demande, la préparation des enduits de sol et la mesure de leurs propriétés relatives à l'auto-étalement, à la vitesse de prise, à la résistance en flexion (Rf), à la résistance en compression (Rc) et au retrait ont été réalisées en respectant le protocole et les conditions opératoires définies dans le document technique CSTB relatif aux enduits de sol, intitulé modalités d'essais et contrôles effectués par le fabricant, n°DT7, Révision 01.

**I-Série d'essais No1 sur les compositions des exemples 1,2 et 5**

**I.1-Essais sur produit humide**

I.1.1-Préparation du produit gâché (enduit de lissage de sol)

Dans un bol, 2 kilogrammes de composition pulvérulente sont malaxés avec de l'eau à un taux de gâchage de 16% pendant 1 minute à l'aide d'un malaxeur mécanique tel que décrit dans la norme NF EN1937 à vitesse lente (vitesse de rotation 140 tours par minute (t/mn) et vitesse de rotation planétaire 62 t/mn). Puis la paroi du récipient et le batteur du malaxeur sont raclés à l'aide d'une spatule pour détacher la poudre éventuellement agglomérée. A nouveau, l'ensemble est malaxé pendant 1 minute à vitesse lente (vitesse de rotation 140 tours par minute (t/mn) et vitesse de rotation planétaire 62 t/mn).

1.1.2-Mesure du diamètre d'étalement et de l'homogénéité de l'enduit de lissage de sol

Les mesures du diamètre d'étalement et de l'homogénéité de l'enduit de sol à 5 minutes puis à 20 minutes sont réalisées à partir d'un même produit gâché, préparé comme décrit ci-dessus en I.1.1.

Mesure à 5 minutes (min):

Après 5 minutes de repos, le produit gâché est versé dans un anneau de 30 mm de diamètre et 50 mm de hauteur placé au centre d'une plaque de verre. Une fois rempli, l'anneau est soulevé et libère le produit qui s'étale sur la plaque de verre.

Au bout de 5 minutes d'attente, on relève le diamètre d'étalement du produit exprimé en millimètre et mesuré suivant 2 axes perpendiculaires, et on évalue visuellement l'homogénéité du produit étalé en notant la présence ou non de sédimentation aux pourtours de la pâte.

Les résultats sont répertoriés dans le tableau 2 suivant et correspondent à la valeur moyenne calculée sur trois essais.

Mesure à 20 minutes (min):

Après 20 minutes au repos, on évalue visuellement sur le produit gâché que celui-ci est resté homogène, c'est-à-dire qu'il y a pas eu de sédimentation de ses ingrédients au fond du bol.

Le produit est ensuite mélangé manuellement avec 3 tours de pale avant d'être versé dans un anneau de même dimension que décrit précédemment. La mesure du diamètre d'étalement du produit est réalisé comme précédemment, 5 minutes après avoir soulevé l'anneau.

Les résultats sont répertoriés dans le tableau 2 suivant et correspondent à la valeur moyenne calculée sur trois essais.

1.1.3-Mesure du temps de prise (Vicat)

Les mesures du temps de début de prise et de fin de prise de l'enduit de sol sont réalisées à partir d'un même produit gâché, préparé comme décrit ci-dessus en I.1.1.

Les mesures du temps de début de prise et de fin de prise de l'enduit de sol sont réalisées avec un appareil de Vicat tel que décrit dans la norme EN 13454-2.

Le produit gâché est versé dans un moule normalisé que l'on remplit pour réaliser les mesures. Le moule utilisé est un moule en caoutchouc de forme tronconique ayant des diamètres intérieurs supérieur et inférieur respectivement de 7cm et 8cm, et pourvu à sa base d'une plaque de verre amovible plus large que le moule en caoutchouc et possédant une épaisseur d'au moins 2,5 mm.

Le temps de prise est déterminé par l'observation de la pénétration d'une aiguille de 1,13 mm de diamètre dans le produit gâché, sous une charge de 300 grammes, correspondant au poids propre de l'appareil de Vicat.

Le début de prise correspond au temps au bout duquel l'aiguille cesse de s'enfoncer sous l'effet de la charge appliquée et s'arrête à une distance de 4 mm $\pm$ 1 mm du fond du moule, à compter du début de malaxage de composition pulvérulente avec de l'eau.

Pour déterminer la fin de prise, on retourne le moule après avoir déterminé le début de prise du produit et on retire la plaque de verre afin de réaliser les mesures d'enfoncement de l'aiguille sur la face du produit ayant été en contact avec la plaque de verre. Les mesures d'enfoncement de l'aiguille sont réalisées à différents endroits de la surface du produit.

La fin de prise correspond au temps au bout duquel l'aiguille ne pénètre plus pour la première fois qu'à 0,5 mm dans le produit, à compter du début de malaxage de composition pulvérulente avec de l'eau.

Les résultats, exprimés en minutes, sont répertoriés dans le tableau 2 suivant et correspondent à la valeur moyenne calculée sur trois essais.

**I.2-Essais sur produit durci**

1.2.1-Préparation des éprouvettes

Le produit gâché préparé précédemment en I.1.1 à partir de 2 kg de composition pulvérulente et de l'eau à un taux de gâchage de 16% est utilisé pour réaliser les éprouvettes qui vont servir pour les essais qui suivent sur l'enduit de sol durci.

Le produit gâché est versé dans chacun des trois compartiments rectangulaires d'un moule permettant la préparation simultanée de trois éprouvettes de forme parallélépipédique de 16cm de hauteur et ayant pour base un carré de 4 cm de côté.

Avant démoulage, les éprouvettes sont stockées recouverts d'une plaque de verre, à 23°C et 50 % d'humidité relative.

24 heures après le début du malaxage avec de l'eau, les éprouvettes sont démoulées.

Une fois démoulées, et entre deux mesures, les éprouvettes sont entreposées à 23°C et 50% d'humidité relative.

### 1.2.2-Mesure de la résistance en flexion (Rf)

Les essais de résistance en flexion ont été effectués à 24 heures, 7 jours et 28 jours après coulage des éprouvettes, à l'aide d'une machine d'essais de résistance à la flexion et en compression telle que décrite dans la norme NF EN 196-1. Le dispositif pour l'essai de résistance à la flexion comprend deux rouleaux d'appui placés parallèlement sur un même plan horizontal à une distance de 100 mm l'un de l'autre, et un troisième rouleau parallèle (appelé rouleau de mise en charge), surmontant les deux autres et placé à équidistance des deux autres rouleaux. Les trois rouleaux sont en acier, possèdent chacun un diamètre de 10 mm et une longueur de 48 mm. L'éprouvette est placée dans l'appareil, de manière à être enserrée par les trois rouleaux, les axes des trois rouleaux étant perpendiculaires à la longueur de l'éprouvette et l'axe du rouleau de mise en charge coïncidant avec le milieu de la longueur de l'éprouvette.

On applique une charge sur la face latérale supérieure de l'éprouvette en faisant chuter verticalement le rouleau de mise en charge, puis le rouleau se replace dans sa position initiale. Tant que l'éprouvette ne rompt pas, cette étape est répétée en appliquant une charge supérieure. La charge appliquée est augmentée progressivement à une vitesse de mise en charge de 50 Newton par seconde (N/s) (50 N/s $\pm$ 10 N/s) jusqu'à la rupture de l'éprouvette.

La résistance à la flexion correspond à la force nécessaire pour rompre l'éprouvette et est exprimée en Mégapascale (MPa).

Les résultats sont répertoriés dans le tableau 2 suivant et correspondent à la valeur moyenne calculée sur trois essais.

### 1.2.3-Mesure de la résistance en compression (Rc)

Les essais de résistance en compression ont été effectués sur les deux moitiés de chacune des éprouvettes rompues selon le protocole des essais de résistance en flexion décrit précédemment. Au total six essais sont donc réalisés pour chaque âge du matériau de construction (24 heures, 7 jours, 28 jours).

On place une moitié d'éprouvette en sandwich entre les deux plaques mobiles parallèles de l'appareil de mesure, de manière à ce que les faces latérales de la demi-éprouvette soient centrées et en contact avec les plaques mobiles. Chaque plaque fait 40 mm de long et 40 mm de large.

On applique une charge sur la demi-éprouvette en exerçant une force de compression à l'aide des deux plaques mobiles et on mesure simultanément la résistance en compression de la demie-éprouvette. La charge appliquée est augmentée progressivement à une vitesse de mise en charge de 2400 N/s $\pm$ 200 N/s et la valeur de la résistance en compression (exprimée en MPa) est enregistrée en continu, jusqu'à rupture, c'est-à-dire jusqu'au moment où la résistance opposée par la demi-éprouvette est nulle.

Les résultats sont répertoriés dans le tableau 2 suivant et correspondent à la valeur moyenne calculée sur six essais pour chaque âge (24h, 7j, 28j).

### 1.2.4-Mesure de retrait

Les mesures de retrait ont été réalisées sur une série de 3 éprouvettes préparées comme décrit précédemment en 1.2.1.

Les mesures de retrait ont été réalisées à l'aide d'un déformètre tel que décrit dans la norme NF P15-433 et d'une tige de 16cm de long en invar servant de référence.

Dès le démoulage des éprouvettes, soit 24 heures après le début du malaxage de la composition pulvérulente avec de l'eau, on mesure la longueur initiale de chacune des éprouvettes.

Après la mesure, les éprouvettes sont restockées dans les mêmes conditions que décrites précédemment en 1.2.1.

On mesure ensuite la longueur finale des éprouvettes à 28 jours, c'est-à-dire 28 jours après le début du malaxage de la composition pulvérulente avec de l'eau.

Puis, on calcule pour chaque éprouvette le retrait comme étant la différence entre la longueur finale et la longueur initiale de l'éprouvette, le tout divisé par la longueur de la référence (16 cm).

Les résultats, exprimés en micromètre par mètre ($\mu$m/m), sont répertoriés dans le tableau 2 suivant et correspondent à la valeur moyenne de retrait calculée sur les trois éprouvettes.

**Résultats de la série d'essais No1 sur les compositions des exemples 1,2 et 5**

**Tableau 2**

| Propriétés de l'enduit de sol | Ex1 (Invention) | Ex2 (Comparatif 1) | Ex5 (Comparatif 4) |
|---|---|---|---|
| Diamètre d'étalement après 5 min de repos (mm) | 150 | 150 | 150 |
| Sédimentation après 5 min de repos (mm) | non | non | non |
| Diamètre d'étalement après 20 min de repos (mm) | 150 | 150 | 135 |
| Sédimentation après 20 min de repos (mm) | non | non | non |
| Début de Prise Vicat (min) | 230 | 300 | 230 |
| Fin de Prise Vicat (min) | 270 | 330 | 270 |
| Rc 24h (Mpa) | 8 | 6 | 2 |
| Rf 24h (Mpa) | 2 | 2 | 0.5 |
| Rc 7j (Mpa) | 35 | 30 | 10 |
| Rf 7j (Mpa) | 5 | 5 | 2 |
| Rc 28j (Mpa) | 40 | 35 | 20 |
| Rf 28j (Mpa) | 6 | 6 | 5 |
| Retrait à 28 jours ($\mu$m/m) | <1500 | <2000 | <2000 |

Ces résultats d'essais montrent que :

- l'enduit de sol selon l'invention (ex.1) ne sédimente pas et présente une bonne propriété d'auto-étalement dans le temps,
- l'enduit de sol selon l'invention (ex.1) a de très bonnes résistances mécaniques en compression à court terme tout en ayant une aptitude à l'emploi souhaitée pour sa mise en œuvre. Les enduits de sol comparatifs (ex.2 et 5) ne permettent pas pour des temps de prise équivalents, d'obtenir de résistances mécaniques en compression satisfaisantes à court terme,
- la cinétique des résistances mécaniques de l'enduit de sol selon l'invention est également meilleure par rapport à l'enduit de sol de référence,
- l'enduit de sol selon l'invention présente des valeurs de résistances à la flexion supérieures à l'enduit de sol de référence. La flexibilité de l'enduit de sol durci selon l'invention lui permet de gagner notamment en durabilité lorsque le sol est soumis à des déformations ou vibrations,
- l'enduit de sol selon l'invention présente un retrait moindre et donc une stabilité dimensionnelle améliorée par rapport aux enduits de sol comparatifs. En particulier, on n'observe aucune fissure sur le produit durci de l'invention.

**II-Série d'essais No2 sur les compositions des exemples 1 à 4**

Mesure du temps de prise et de la chaleur totale d'hydratation (par Calorimétrie Isotherme)

Les mesures de temps de prise et de chaleur totale d'hydratation sont réalisées sur un échantillon de 7,5 grammes de produit gâché, préparé comme décrit précédemment en I.1.1.

L'échantillon est introduit dans une ampoule scellée thermiquement. L'ampoule est introduite dans un calorimètre isotherme TAM Air régulé à 23°C, doté d'une ampoule de référence scellée thermiquement contenant de l'eau. La quantité d'eau contenue dans l'ampoule de référence est calculée de manière bien connue par l'homme du métier de manière à ce que la capacité calorifique de l'ampoule de mesure contenant le produit gâché soit égale à la capacité calorifique de l'ampoule de référence. La calorimétrie isotherme permet de mesurer les écarts de chaleur entre l'échantillon et la référence.

La réaction d'hydratation du liant hydraulique, responsable de la prise et de durcissement du liant, étant exothermique, on suit par calorimétrie isotherme les écarts de chaleur provoqués par cette réaction en fonction du temps, afin d'évaluer la réactivité du liant au contact de l'eau.

On trace la courbe de flux de chaleur dégagé par le produit gâché (en Watt par gramme de produit) et la courbe de chaleur dégagée par le produit gâché (en Joule par gramme de produit), en fonction du temps écoulé à compter de la préparation du produit gâché (jusqu'à 72 heures environ), pour chaque enduit de sol testé.

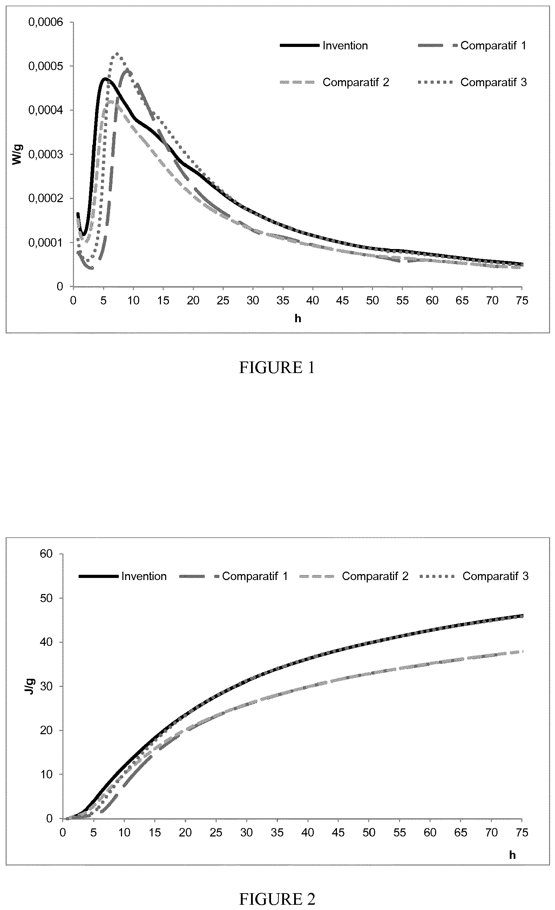

La courbe de flux de chaleur dégagé par le produit gâché en fonction du temps représentée par la figure 1, illustre la cinétique d'hydratation des différents enduits de sol testés (fig.1).

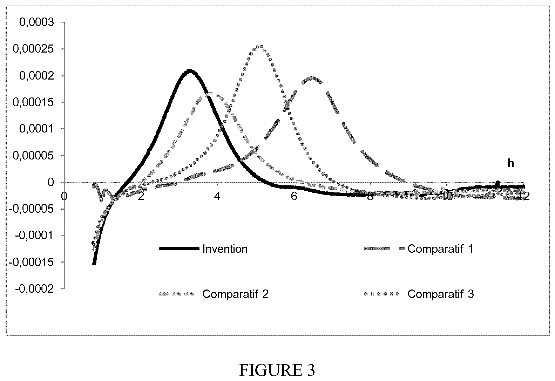

La courbe de chaleur dégagée par le produit gâché en fonction du temps, représentée par la figure 2, permet de déterminer la valeur du début de prise et de fin de prise du produit par recherche des points d'inflexion. Toutefois, en pratique cela s'avère difficile. Aussi, on trace à la figure 3 la dérivée première d(q) / d(t) de la courbe de flux de chaleur dégagée par le produit gâché en fonction du temps pour chacun des enduits de sol testés, afin d'identifier de manière plus précise les valeurs de début de prise et fin de prise de chacun de ces produits.

On identifie le début de prise (DP) et fin de prise (FP) à l'aide de la figure 3, ainsi que la chaleur totale dégagée par le produit 72 heures après son hydratation.

La valeur de début de prise correspond au temps écoulé à compter de la préparation du produit gâché, pour lequel le maximum de la dérivée d(q) / d(t) est atteint. La valeur de fin de prise correspond au temps écoulé à compter de la préparation du produit gâché, pour lequel la valeur de la dérivée d(q) / d(t) est nulle.

Les début et fin de prise du liant permettent de caractériser la vitesse de prise du liant et donc la réactivité de celui-ci au contact de l'eau. En particulier, le début de prise du liant correspond au moment, à compter du début du gâchage avec l'eau, où le produit s'épaissit brusquement et commence à s'échauffer. Tandis que, la fin de prise du liant qui coïncide avec le début du durcissement du liant, correspond au moment, à compter du début du gâchage avec l'eau, où le produit devient rigide et cesse d'être déformable. Le dégagement de chaleur commence à ralentir à partir de ce moment.

La chaleur totale dégagée par le produit au cours de son hydratation est corrélée aux propriétés mécaniques développées par le produit au cours de son hydratation.

La chaleur totale dégagée par le produit mesurée après 72 heures d'hydratation permet donc de caractériser le degré de rigidité atteint par le produit.

De fait, plus la cinétique de la réaction d'hydratation et la chaleur totale d'hydratation du produit sont importants, plus le liant est activé.

Les résultats sont regroupés dans le tableau 3 suivant et illustrés par les courbes de calorimétrie représentées aux figures 1 à 3.

**Résultats de la série d'essais No2 sur les compositions des exemples 1 à 4**

**Tableau 3**

|  | Ex1 (Invention) | Ex2 (Comparatif 1) | Ex3 (Comparatif 2) | Ex4 (Comparatif 3) |
|---|---|---|---|---|
| DP (heures) | 3,2 | 6,5 | 4,7 | 5,1 |
| FP (heures) | 5,3 | 8,9 | 6,9 | 7,1 |
| Chaleur totale d'hydratation après 72h (J/g) | 45,4 | 37,3 | 37,6 | 45,3 |

L'enduit de sol selon l'invention (ex.1) comprenant un système d'activation à 4 composants, présente un temps de prise inférieur et une chaleur totale d'hydratation après 72h supérieure aux valeurs trouvées pour les enduits de sol comparatifs (ex. 2 à 4) comprenant à teneur comparable un système d'activation doté de 2 ou 3 composants seulement.

Ces résultats d'essais montrent donc que l'enduit de sol selon l'invention (ex.1) présente une vitesse de prise améliorée et permet d'atteindre (au-delà de 72h d'hydratation) une résistance mécanique améliorée, par rapport aux enduits de sol comparatifs (ex. 2 à 4) qui présentent un système d'activation différent.

**Revendications**

1. Composition de liant hydraulique comprenant :

   a) au moins 50% en poids par rapport au poids de la composition de liant hydraulique, d'un laitier granulé de haut fourneau moulu,
   b) au moins du sulfate de calcium,
   c) au moins un produit choisi parmi une source de clinker Portland et de la chaux,
   d) au moins un dérivé d'aluminium choisi parmi une alumine possédant une surface spécifique BET déterminée par adsorption d'azote, conformément à la norme ISO 9277:2010, allant de 100 à 400 $m^2$/g, un aluminate

monocalcique et un sulfoaluminate de calcium, et

e) au moins un sel de métal alcalin ou alcalino-terreux choisi parmi les sels de chlorure, les sels de bromure, les sels de silicate, les sels de nitrate, les sels d'acide carboxylique tels que les sels d'acide monocarboxylique en $C_1$-$C_4$,

- la teneur totale en sulfate de calcium exprimée en teneur équivalente de $SO_3$ étant d'au moins 5% en poids par rapport au poids de la composition de liant hydraulique,
- la somme des teneurs des produits cités aux points c) et e) étant inférieure à 10% en poids par rapport au poids de la composition de liant hydraulique.

2. Composition de liant hydraulique selon la revendication 1, **caractérisée en ce que** le laitier granulé de haut fourneau moulu comprend des quantités d'oxyde de calcium, de magnésie, d'alumine et de silice satisfaisant au moins à l'une des trois relations suivantes:

$$-r1 = \frac{(CaO+MgO)}{(Al2O3+SiO2)} > 1,03$$

$$-r2 \ (F11) = \frac{(CaO+MgO+0,3*Al2O3)}{(SiO2+0.7*Al2O3)} > 1,20$$

$$-r3 \ (F3) = \frac{(CaO+MgO+Al2O3)}{(SiO2)} \geq 1,6,$$

et la teneur en oxyde d'aluminium ($Al_2O_3$) étant inférieure à 13% en poids du poids de laitier granulé de haut fourneau moulu,

r1, r2 et r3 correspondant aux rapports pondéraux relatifs aux quantités d'oxyde de calcium, de magnésie, d'alumine et de silice, présentes dans le laitier granulé de haut fourneau moulu.

3. Composition de liant hydraulique selon la revendication 1 ou 2, **caractérisée en ce que** la surface spécifique Blaine du laitier granulé de haut fourneau moulu va de 7000 à 8000 cm$^2$/g.

4. Composition de liant hydraulique selon l'une quelconque des revendications 1 à 3, **caractérisée en ce que** la taille maximale des particules du laitier granulé de haut fourneau moulu est inférieure à 45$\mu$m.

5. Composition de liant hydraulique selon l'une quelconque des revendications 1 à 4, **caractérisée en ce qu'**elle comprend une teneur totale en laitier(s) granulé(s) de haut fourneau moulu(s) allant de 60 à 70% en poids par rapport au poids de la composition de liant hydraulique.

6. Composition de liant hydraulique selon l'une quelconque des revendications 1 à 5, **caractérisée en ce que** le sulfate de calcium comprend au moins 90% en poids de sulfate de calcium anhydre par rapport au poids de sulfate de calcium.

7. Composition de liant hydraulique selon l'une quelconque des revendications 1 à 6, **caractérisée en ce qu'**elle comprend une teneur totale en produit(s) choisi(s) parmi une source de clinker Portland, de la chaux, et leur mélange, allant de 0,2 à 4% en poids par rapport au poids total de la composition de liant hydraulique.

8. Composition de liant hydraulique selon l'une quelconque des revendications 1 à 7, **caractérisée en ce qu'**elle comprend une teneur totale en dérivé(s) d'aluminium tel(s) que défini(s) dans la revendication 1 allant de 0,2 à 2,1% en poids par rapport au poids total de la composition de liant hydraulique.

9. Composition de liant hydraulique selon l'une quelconque des revendications 1 à 8, **caractérisée en ce qu'**elle comprend une teneur totale en sel(s) de métal alcalin ou alcalino-terreux tel(s) que défini(s) dans la revendication 1 inférieure à 5% en poids par rapport au poids total de la composition de liant hydraulique, le(s)dit(s) sel(s) étant choisi(s) parmi le chlorure de calcium ($CaCl_2$), le formiate de calcium et/ou de l'acétate de calcium.

10. Composition de matériau de construction prête-à-gâcher comprenant :

- un liant hydraulique tel défini dans la revendication 1, et
- des granulats de matériaux inertes, susceptibles d'être agglomérés en phase aqueuse au moyen dudit liant pour former un agrégat,

ladite composition étant destinée à être mélangée avec de l'eau juste avant ou au moment de son emploi.

**11.** Composition prête-à-gâcher selon la revendication 10, **caractérisée en ce qu'**elle comprend au moins un polymère sous forme de poudre dispersable dans l'eau ou sous forme de dispersion aqueuse de polymère.

**12.** Procédé de mise en oeuvre d'une composition prête-à-gâcher telle que définie dans la revendication 10 ou 11, comprenant une étape de gâchage de ladite composition avec de l'eau, en vue de la préparation d'un matériau de construction.

**13.** Procédé selon la revendication 12, en vue de la préparation d'un matériau de construction qui est du type mortier colle, mortier joint, ou mortier ou enduit de lissage.


**Patentansprüche**

**1.** Hydraulische Bindemittelzusammensetzung, umfassend:

a) mindestens 50 Gew.-%, bezogen auf das Gewicht der hydraulischen Bindemittelzusammensetzung, gemahlene granulierte Hochofenschlacke,
b) mindestens Calciumsulfat,
c) mindestens ein Produkt, das aus einer Quelle von Portlandklinker und Kalk ausgewählt ist,
d) mindestens ein Aluminiumderivat, das aus einem Aluminiumoxid mit einer durch Stickstoffadsorption gemäß der ISO-Norm 9277:2010 bestimmten spezifischen BET-Oberfläche im Bereich von 100 bis 400 $m^2$/g, einem Monocalciumaluminat und einem Calciumsulfoaluminat ausgewählt ist, und
e) mindestens ein Alkalimetall-oder Erdalkalimetallsalz, das aus Chloridsalzen, Bromidsalzen, Silikatsalzen, Nitratsalzen, Carbonsäuresalzen wie $C_1$-$C_4$-Monocarbonsäuresalzen ausgewählt ist,

- wobei der Gesamtgehalt an Calciumsulfat, ausgedrückt als $SO_3$-Äquivalentgehalt, mindestens 5 Gew.-%, bezogen auf das Gewicht der hydraulischen Bindemittelzusammensetzung, beträgt,
- wobei die Summe der Gehalte der in den Punkten c) und e) angegebenen Produkte weniger als 10 Gew.-%, bezogen auf das Gewicht der hydraulischen Bindemittelzusammensetzung, beträgt.

**2.** Hydraulische Bindemittelzusammensetzung nach Anspruch 1, **dadurch gekennzeichnet, dass** die gemahlene granulierte Hochofenschlacke Mengen von Calciumoxid, Magnesiumoxid, Aluminiumoxid und Siliciumdioxid umfasst, die mindestens einer der drei folgenden Beziehungen genügen:

$$-r1 = \frac{(CaO+MgO)}{(Al2O3+SiO2)} > 1,03$$

$$-r2 \ (F11) = \frac{(CaO+MgO+0,3*Al2O3)}{(SiO2+0.7*Al2O3)} > 1,20$$

$$-r3 \ (F3) = \frac{(CaO+MgO+Al2O3)}{(SiO2)} \geq 1,6,$$

und der Gehalt an Aluminiumoxid ($Al_2O_3$) weniger als 13 Gew.-% des Gewichts der gemahlenen granulierten Hochofenschlacke beträgt, wobei r1, r2 und r3 den Gewichtsverhältnissen in Bezug auf die in der gemahlenen granulierten Hochofenschlacke vorliegenden Mengen von Calciumoxid, Magnesiumoxid, Aluminiumoxid und Siliciumdioxid entsprechen.

**3.** Hydraulische Bindemittelzusammensetzung nach Anspruch 1 oder 2, **dadurch gekennzeichnet, dass** die spezifische Blaine-Oberfläche der gemahlenen granulierten Hochofenschlacke im Bereich von 7000 bis 8000 cm$^2$/g liegt.

4. Hydraulische Bindemittelzusammensetzung nach einem der Ansprüche 1 bis 3, **dadurch gekennzeichnet, dass** die Maximalgröße der Teilchen der gemahlenen granulierten Hochofenschlacke weniger als 45 μm beträgt.

5. Hydraulische Bindemittelzusammensetzung nach einem der Ansprüche 1 bis 4, **dadurch gekennzeichnet, dass** sie einen Gesamtgehalt an gemahlener granulierter Hochofenschlacke bzw. gemahlenen granulierten Hochofenschlacken im Bereich von 60 bis 70 Gew.-%, bezogen auf das Gewicht der hydraulischen Bindemittelzusammensetzung, umfasst.

6. Hydraulische Bindemittelzusammensetzung nach einem der Ansprüche 1 bis 5, **dadurch gekennzeichnet, dass** das Calciumsulfat mindestens 90 Gew.-% wasserfreies Calciumsulfat, bezogen auf das Gewicht des Calciumsulfats, umfasst.

7. Hydraulische Bindemittelzusammensetzung nach einem der Ansprüche 1 bis 6, **dadurch gekennzeichnet, dass** sie einen Gesamtgehalt an Produkt bzw. Produkten, die aus einer Quelle von Portlandklinker, Kalk und einer Mischung davon ausgewählt ist bzw. sind, im Bereich von 0,2 bis 4 Gew.-%, bezogen auf das Gesamtgewicht der hydraulischen Bindemittelzusammensetzung, aufweist.

8. Hydraulische Bindemittelzusammensetzung nach einem der Ansprüche 1 bis 7, **dadurch gekennzeichnet, dass** sie einen Gesamtgehalt an Aluminiumderivat bzw. Aluminiumderivaten gemäß Anspruch 1 im Bereich von 0,2 bis 2,1 Gew.-%, bezogen auf das Gesamtgewicht der hydraulischen Bindemittelzusammensetzung, aufweist.

9. Hydraulische Bindemittelzusammensetzung nach einem der Ansprüche 1 bis 8, **dadurch gekennzeichnet, dass** sie einen Gesamtgehalt an Alkalimetall- oder Erdalkalimetallsalz bzw. -salzen gemäß Anspruch 1 von weniger als 5 Gew.-%, bezogen auf das Gesamtgewicht der hydraulischen Bindemittelzusammensetzung, aufweist, wobei das Salz bzw. die Salze aus Calciumchlorid (CaCl$_2$), Calciumformiat und/oder Calciumacetat ausgewählt ist bzw. sind.

10. Anrührfertige Baustoffzusammensetzung, umfassend:

    - ein hydraulisches Bindemittel gemäß Anspruch 1 und

    - Zuschlagstoffe aus inerten Materialien, die in wässriger Phase mit Hilfe des Bindemittels zur Bildung eines Aggregats agglomerieren können, wobei die Zusammensetzung zum Mischen mit Wasser unmittelbar vor oder zum Zeitpunkt ihrer Anwendung bestimmt ist.

11. Anrührfertige Zusammensetzung nach Anspruch 10, **dadurch gekennzeichnet, dass** sie mindestens ein Polymer in Form eines wasserdispergierbaren Pulvers oder in Form einer wässrigen Polymerdispersion umfasst.

12. Verfahren zur Verwendung einer anrührfertigen Zusammensetzung gemäß Anspruch 10 oder 11, umfassend einen Schritt des Anrührens der Zusammensetzung mit Wasser zur Herstellung eines Baustoffs.

13. Verfahren nach Anspruch 12, zur Herstellung eines Baustoffs vom Typ Klebemörtel, Fugenmörtel oder Ausgleichsmörtel oder -putz.

**Claims**

1. Hydraulic binder composition comprising:

    a) at least 50% by weight, with respect to the weight of the hydraulic binder composition, of a ground granulated blast furnace slag,
    b) at least calcium sulphate,
    c) at least one product chosen from a source of Portland clinker and lime,
    d) at least one aluminium derivative chosen from an alumina having a BET specific surface determined by nitrogen adsorption, in accordance with Standard ISO 9277:2010, ranging from 100 to 400 m$^2$/g, a monocalcium aluminate and a calcium sulphoaluminate, and
    e) at least one alkali metal or alkaline earth metal salt chosen from chloride salts, bromide salts, silicate salts, nitrate salts or carboxylic acid salts, such as $C_1$-$C_4$ monocarboxylic acid salts,

- the total content of calcium sulphate, expressed as $SO_3$ equivalent content, being at least 5% by weight, with respect to the weight of the hydraulic binder composition,
- the sum of the contents of the products cited in points c) and e) being less than 10% by weight, with respect to the weight of the hydraulic binder composition.

2. Hydraulic binder composition according to Claim 1, **characterized in that** the ground granulated blast furnace slag comprises amounts of calcium oxide, magnesia, alumina and silica satisfying at least one of the following three relationships:

$$-r1 = \frac{(CaO+MgO)}{(Al2O3+SiO2)} > 1.03$$

$$-r2 \ (F11) = \frac{(CaO+MgO+0.3*Al2O3)}{(SiO2+0.7*Al2O3)} > 1.20$$

$$-r3 \ (F3) = \frac{(CaO+MgO+Al2O3)}{(SiO2)} \geq 1.6,$$

and the content of aluminium oxide ($Al_2O_3$) being less than 13% by weight of the weight of ground granulated blast furnace slag,
r1, r2 and r3 corresponding to the ratios by weight relating to the amounts of calcium oxide, magnesia, alumina and silica present in the ground granulated blast furnace slag.

3. Hydraulic binder composition according to Claim 1 or 2, **characterized in that** the Blaine specific surface of the ground granulated blast furnace slag ranges from 7000 to 8000 $cm^2$/g.

4. Hydraulic binder composition according to any one of Claims 1 to 3, **characterized in that** the maximum size of the particles of the ground granulated blast furnace slag is less than 45 $\mu$m.

5. Hydraulic binder composition according to any one of Claims 1 to 4, **characterized in that** it comprises a total content of ground granulated blast furnace slag(s) ranging from 60 to 70% by weight, with respect to the weight of the hydraulic binder composition.

6. Hydraulic binder composition according to any one of Claims 1 to 5, **characterized in that** the calcium sulphate comprises at least 90% by weight of anhydrous calcium sulphate, with respect to the weight of calcium sulphate.

7. Hydraulic binder composition according to any one of Claims 1 to 6, **characterized in that** it comprises a total content of product(s) chosen from a source of Portland clinker, lime, and their mixture ranging from 0.2 to 4% by weight, with respect to the total weight of the hydraulic binder composition.

8. Hydraulic binder composition according to any one of Claims 1 to 7, **characterized in that** it comprises a total content of aluminium derivative(s) as defined in Claim 1 ranging from 0.2 to 2.1% by weight, with respect to the total weight of the hydraulic binder composition.

9. Hydraulic binder composition according to any one of Claims 1 to 8, **characterized in that** it comprises a total content of alkali metal or alkaline earth metal salt(s) as defined in Claim 1 of less than 5% by weight, with respect to the total weight of the hydraulic binder composition, the said salt(s) being chosen from calcium chloride ($CaCl_2$), calcium formate and/or calcium acetate.

10. Ready-to-mix building material composition comprising:

- a hydraulic binder as defined in Claim 1, and
- aggregates of inert materials capable of being agglomerated in the aqueous phase by means of the said binder in order to form an aggregated product,

the said composition being intended to be mixed with water immediately before or at the time of its use.

11. Ready-to-mix composition according to Claim 10, **characterized in that** it comprises at least one polymer in the form of a water-dispersible powder or in the form of an aqueous polymer dispersion.

12. Process for employing a ready-to-mix composition as defined in Claim 10 or 11, comprising a stage of mixing the said composition with water for the purpose of the preparation of a building material.

13. Process according to Claim 12, for the purpose of the preparation of a building material which is of the adhesive mortar, pointing mortar or levelling mortar or coating type.

FIGURE 1

FIGURE 2

FIGURE 3

**EP 3 015 438 B1**

**Documents brevets cités dans la description**

- US 6409820 B
- JP H10231165 B
- EP 1975135 A
- CA 1131664